# EUROPEAN PATENT SPECIFICATION

(11) **EP 0 799 777 B1**
(45) Date of publication and mention of the grant of the patent: **20.10.1999**
(21) Application number: 97650012.4
(22) Date of filing: 03.04.1997
(51) Int. Cl.: B65G 39/09

(54) **A conveyor roller**
Rolle für eine Förderanlage
Rouleau transporteur

(30) Priority: 03.04.1996 IE 960269; 27.01.1997 IE 970051
(43) Date of publication of application: 08.10.1997
(73) Proprietor: Murphy, James, Cork (IE)
(72) Inventor: Murphy, James, Cork (IE)
(74) Representative: O'Brien, John Augustine

(56) References cited:
- AU-B- 500 327
- DE-C- 889 424
- DE-U- 8 910 060
- GB-A- 1 205 379
- GB-A- 2 030 659
- GB-A- 2 225 066
- US-A- 5 028 054

## Description

The invention relates to conveyor rollers.

Various different constructions of conveyor rollers are known. The major problems with known rollers however is ingress of moisture, dirt and grit to the bearings on which the roller rotates. This reduces the life of the roller, in use.

More particularly, the invention relates to a conveyor roller of the type comprising:-
a hollow cylindrical roller body;
a pair of end covers for the roller body;
a support spindle rotatably mounted in bearings inside the end covers;
a bearing seal between the spindle and the bearing; and
an end cover seal in the opening between the end cover and spindle.

DE-U-8910060 and GB-A-1205379 describe conveyor rollers of this general type. However, the seal between the end cover and spindle is not fully effective.

US-A-5028054, AU-B-500327, DE-C-889424 and GB-A-2030659 all describe conveyor rollers in which the roller body is first fixed to end covers. A spindle is pressed through the end covers. The bearings are then fitted outside of the end covers and a variety of different sealing arrangements are used in an effort to protect the exposed bearings. Such conveyor rollers have a poor performance in use as the bearings frequently fail because they are not adequately protected.

This invention is therefore directed towards providing an improved construction of conveyor roller which is more effective in preventing ingress of material to the roller bearings.

### Statements of Invention

The invention is characterised in that the end cover seal comprises an axial sealing section extending in a direction substantially parallel with the spindle and a radial sealing section extending radially outwardly of the axial sealing section, and the end cover includes a counterbore to receive the radial sealing section of the end cover seal.

The conveyor roller of the invention provides an extremely effective seal to prevent ingress of moisture or solid particles. The axial sealing section of the end cover seal provides a seal between the spindle and the exit bore while the radial sealing section in the counterbore of the end cover provides a seal which not only presents ingress but also, because the end cap rotates moisture and dirt particles are thrown off by centrifugal force.

In a particularly preferred embodiment of the invention to promote throw-off of moisture and dirt by centrifugal force the outer face of the end cover seal is flush with the outer face of the end cap adjacent to the end cover seal.

Preferably to further inhibit ingress of moisture and dirt the radial sealing section of the end cover seal includes internal fins means extending to engage the counterbore. In order to provide more than one barrier of this type preferably the internal fin means comprises at least two radially spaced-apart fins.

Particularly to promote sealing engagement and to promote throw off of moisture and dirt preferably the back wall of the counterbore is substantially flat.

To further enhance sealing preferably the end cover includes a shoulder adjacent to the counterbore to receive and sealingly retain the end cover seal. Preferably, in this case to promote sealing engagement, the end cover seal includes an external fin means adjacent to the shoulder.

Most preferably the end cover seal is a tight fit on the spindle for especially effective sealing engagement.

To further promote effective sealing preferably the axial sealing section of the end cover seal extends towards the bearing seal.

Preferably the end cover seal is of elastomeric material.

In a particularly preferred embodiment of the invention, the end cover is of cast material. This is important in ensuring that the bearings, end covers and spindle are correctly aligned. The cast end covers are machined to achieve alignment to the closest possible tolerance.

In one arrangement, the end cover seal extends to the spindle. Alternatively, the end cover seal may extend to a non-rotating section of a contact seal which may also have a rotating section.

In one embodiment of the invention the bearing seal is mounted in the end cap and at least portion of the bearing seal rotates with the end cap.

Preferably, the end covers are of cast iron construction.

In a particularly preferred embodiment of the invention, a rotating contact seal is provided between the bearing and cast iron end cover within the end cover, both mounted on a shaft/spindle and a stationary primary seal located in a counterbore machined in the outside of the end cover. The primary seal is an interference fit on the shaft.

In a preferred embodiment of the invention the roller includes engagement means for engaging the roller body with each end cover, the engagement means comprising a male part on one of the roller body or end cover for engagement in a female slot means on the other of the roller body or end cover. In this case preferably the female slot means comprises a slot in each end plate and the male part is formed at the free ends of the roller body.

In one embodiment of the invention the outer surface of the end cover is shaped to induce throw-off of material as the roller is rotating.

The roller may be a wing roller having an outer blanked end cover and an inner end cover through which the spindle projects.

Alternatively, the roller is a main roller having a spindle projecting at each end of the roller.

The invention also provides a conveyor roller assembly including at least one roller according to the invention.

### Detailed Description

The invention will be more clearly understood from the following description thereof given by way of example only with reference to the accompanying drawings in which:-
Fig. 1 is a side view of a conveyor roller according to the invention;
Fig. 2 is a cross sectional view of an end detail of the roller of Fig. 1;
Fig. 3 is a cross sectional view of an end cover seal used in the roller;
Fig. 4 is a plan view of the seal of Fig. 3;
Fig. 5 is a cross sectional view of an end detail of another conveyor roller;
Fig. 6 is a cross sectional view of an end detail of a further conveyor roller;
Fig. 7 is a detail sectional view illustrating engagement between a roller body and an end cover of the roller;
Fig. 8 is a detail view similar to Fig. 7 of portion of another roller;
Fig. 9 is a perspective view of portion of a conveyor incorporating conveyor rollers and conveyor roller assemblies according to the invention;
Fig. 10 is a front elevational view of one roller assembly of Fig. 9; and
Fig. 11 is an end view of the roller assembly of Fig. 10.

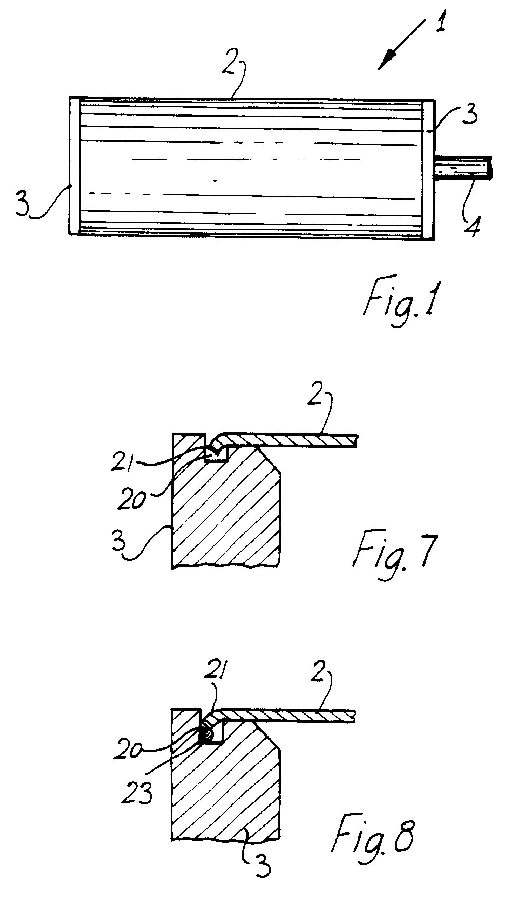

Referring to the drawings and initially to Fig. 1 to 4 thereof there is illustrated a conveyor roller according to the invention indicated generally by the reference numeral 1. The roller 1 comprises an elongate hollow cylindrical roller body 2 having a pair of end covers 3. A central support spindle 4 is rotatably mounted in bearings 5 on the inside of each of the end covers 3. The end covers 3 are of cast metal material. A rotating contact or bearing seal 6 is provided between the spindle 4 and each bearing 5.

The spindle 4 in this case projects through an opening 9 in the end cover 3 for mounting the conveyor roller in position as will be described in more detail below.

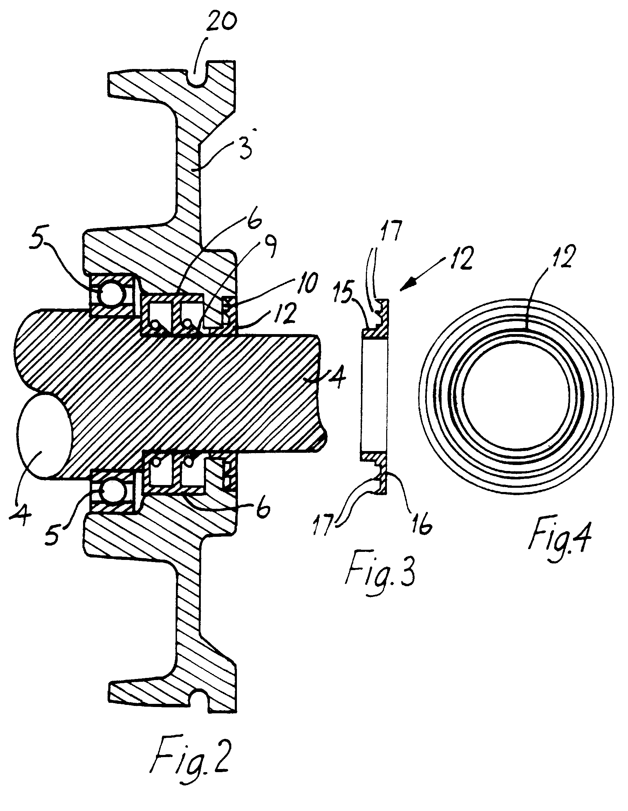

The end cover 3 through which the spindle 4 projects is counterbored at 10 to receive an end cover primary seal 12 which in this case is a static seal. The primary seal 12 is of an elastomeric material and a tight fit on the spindle 4. The seal 12 is illustrated in detail in Figs. 2 to 4 and comprises an axially extending sealing section 15, which in this case extends in use to the spindle 4 and partially along the spindle 4, and a radial sealing section 16 which extends radially outwardly of the axial section 15 and is received in the counterbore 10 of the end cover 3. Fins 17 extend into the counterbore 10 from the radial sealing section 16.

It will be noted that the outer face of the static seal 12 lies in use flush or within the counterbore 10 to ensure that the centrifugal force of the rotating roller 1 will eject surface material outwardly away from the spindle 4. The face of the counterbore 10 is also substantially flat to ensure efficient sealing engagement.

A very effective seal is thus provided against ingress of moisture, dirt and the like to the bearing 5. Consequently, the maintenance-free working life of the roller 1 is prolonged. An extremely tight tolerance is achieved between the outer edge of the axially extending seal section 15 and the corresponding machined edge of the counterbore 10 to prevent ingress.

The static seal 12 has a bore which is undersize with respect to the spindle 4. Thus the seal 12 is driven onto the spindle 4 and is therefore a snug fit on the spindle 4. To facilitate this, in the same lathe setting a counterbore is created at the back of the end cover casting 3. Because a plastic type material is used for the seal 12 very close tolerances between the seal 12 and the rotating cast iron end cover 3 are possible, providing maximum protection. Such close tolerances are not possible without the use of the seal 12 as rusting can occur between the cast iron end cover and steel spindle if the roller is stopped for lengthy periods. This rusting inhibits rotation. Grease traps are created within the static seal 12 by the fins 17. The fins 17 just touch the rotating end covers 3 without increasing torque, and create excellent further sealing spaces which can be filled with water repellent grease. The same close tolerances apply to the bore on the seal 12 relative to the bore in the end cover 3.

In addition to the static seal 12 the contact seal 6 and associated grease barrier prevent liquids passing along the spindle 4.

In the conveyor roller of the invention a counterbore 10 is provided in the end cover 3. In addition, the diameter of the exit bore 9 of the end cover 3 is enlarged. Preferably for high precision the counterbore 10 and enlarged exit bore 9 are cut in one lathe setting. As the seal 12 is pressed onto the spindle 4 it effectively prevents entry of moisture or dirt along the spindle 4 to the area of the bearings 5. The seal 12 also provides a boss which fits tightly into the exit bore 9. Effectively, because the seal 12 is outside and tight on the spindle 4 there is no longer an exit bore. Any ingress of material would attempt entry at the outside diameter of the seal 12. However, this is prevented because the seal 12 is set into a counterbore 10. The centrifugal force of the rotating roller body 2 and end covers 3 effectively ejects the incoming material. This is further provided by the internal fins 17 and the fact that the back wall of the counterbore 10 is flat to promote throw-out of material on rotation. It is believed that the main features of the invention provide what is an especially effective seal which comes as close as possible to closed sealing protection.

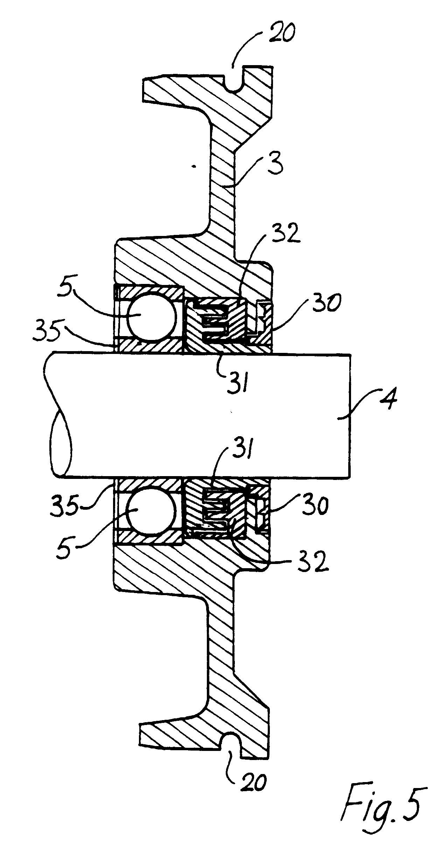

Referring to Fig. 5 there is illustrated portion of a conveyor roller according to another embodiment of the invention. The conveyor roller illustrated in Fig. 5 is similar to the roller of Figs. 1 to 4 and like parts are assigned the same reference numerals. A static seal 30 is similar to the seal 12 described above except that in this case the seal 30 extends not to the spindle 4 but to a non-rotating section 31 of a contact seal which also includes a rotating section 32. The seal sections 31,32 give protection to the full diameter of the bore for the seal 31,32 just in front of the bearing 5. The seal sections 31,32 include projecting fins which interengage as illustrated. When filled with grease the seal 31,32 provides excellent sealing with reduced torque.

A washer type seal 35 is also provided to protect the bearing 5 from the internal environment involving heating and cooling which may cause condensation.

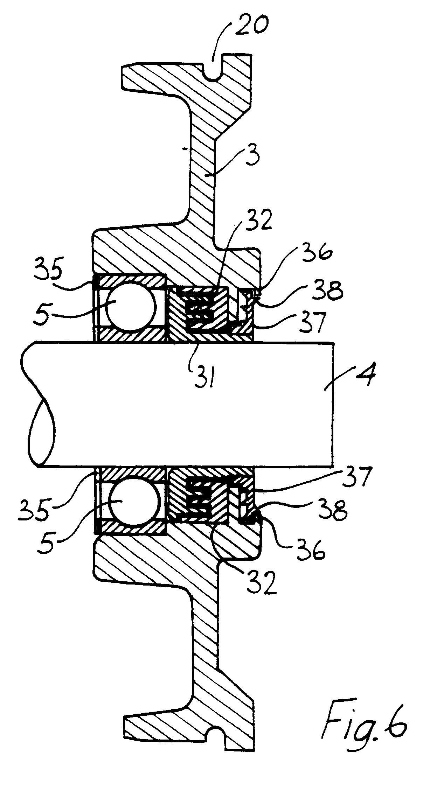

Referring to Fig. 6 there is illustrated portion of a conveyor roller according to another embodiment of the invention. The conveyor roller illustrated in Fig. 6 is similar to that illustrated in Fig. 5 and like parts are again assigned the same reference numerals.

In this case the end cover 3 is machined to include a shoulder 36 as an extension to the casting behind which a static end cover seal 37 is fitted. This additional feature which could equally apply to the arrangement of Figs. 1 to 4 ensures that there is no material build-up between the seal 37 and the end cover 3 in use. Material build up in the region could effectively force the seal 37 to rotate with the end cover 3. The seal 37 is typically fitted by deforming it temporarily underneath the shoulder 36.

The seal 37 may, as in the case illustrated, include an external fin means or lip 38 to act as a throw-off for moisture, dirt, etc., away from the spindle 4.

Referring particularly to Figs. 6 and 7 it will be noted that a circumferential slot 20 is provided in the rim of the end cover 3. An outer edge 21 of the roller body 2 forms a male part which is bent radially inwardly into the slot 20 for sealing engagement.

Fig. 8 illustrates part of another roller which is similar to Fig. 7 and like parts are assigned the same reference numerals. In this case sealing means comprising an elastomeric ring 23 is mounted in the slot 20 as additional protection against the ingress of dirt and moisture.

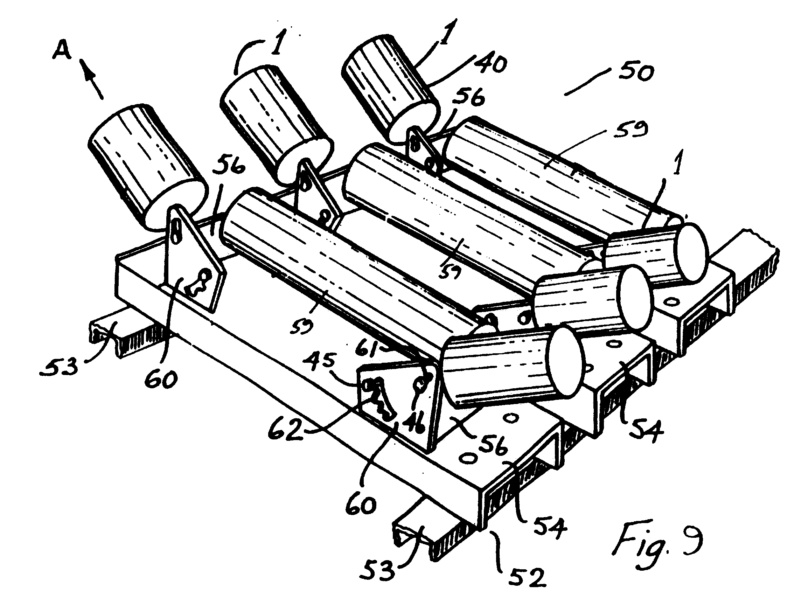

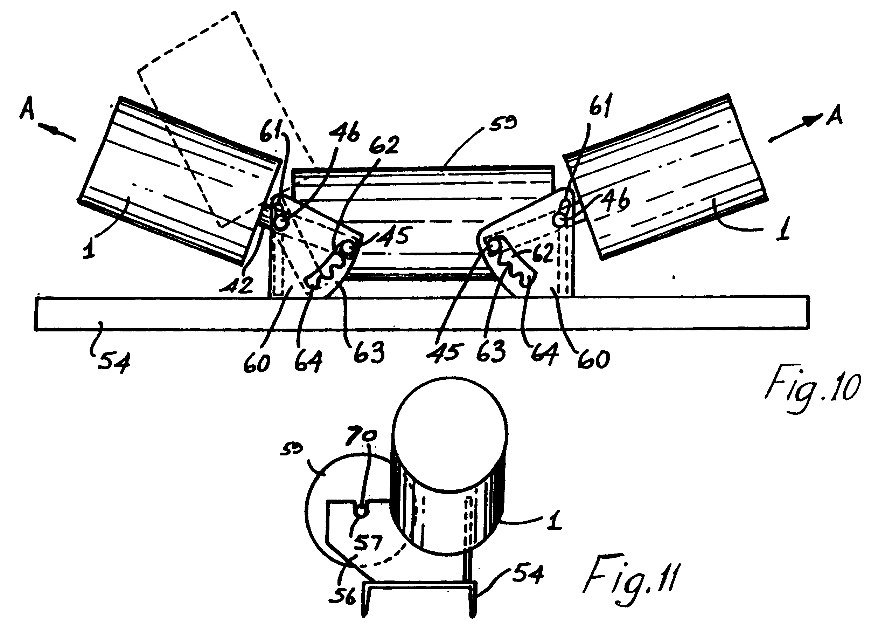

Referring now to Figs. 9 to 11 there is illustrated a portion of a troughed belt conveyor in which the belt has been removed for clarity. The conveyor portion comprises three roller assemblies which incorporate a number of rollers described above, mounted on a base support framework indicated generally by the reference numeral 52. The base support framework 52 has a pair of parallel spaced-apart longitudinally extending side members 53 of inverted channel or angle iron section. Each roller assembly 51 has a support member 54, each end of which is bolted to one of the side members 53, the support member 54 being mounted substantially perpendicularly to the side members 53. A pair of spaced-apart support brackets 56 project upwardly from each base member 54, the support brackets 56 receiving and supporting a centre roller 59 therebetween. A slot 57 is provided at an upper edge of each support bracket 56 to receive an outer end 70 of the spindle 4 of the centre roller 59, as shown in Fig. 11.

A pair of cantilevered wing rollers 1 are mounted on the base member 54 adjacent each end of the centre roller 59. It will be noted that in this case the wing rollers 1 are offset longitudinally from the axis of rotation defined by the spindle 4 of the associated centre rollers 59. The wing rollers 1 are mounted to extend outwardly and upwardly of the centre rollers 59 to define therewith a troughing assembly. Means is provided for varying the angle of inclination of each wing roller 1 relative to the axis of rotation of the centre roller 59, said means comprising a plate member 60 mounted on an upstanding from the base member 54. Each plate member 60 has an adjustment slot 61 for reception of an adjustment pin 46 on a spindle 42 of the wing roller 1 and an arcuate slot 62 for reception of a locating pin 45 on the spindle 42. Three lugs 63 project into the slot 62 to define four recesses 64, each of which is engagable by the locating pin 45 to set the angle of inclination of the wing roller 1. The heads 47 on the pins 45,46 retain the pins 45,46 in position in their respective slots 61,62. It will be noted that the radius of the arcuate slot 62 is substantially equal to the spacing between the locating pin 45 and the adjustment pin 46 to facilitate ease of insertion and withdrawal of the pins 45, 46. For ease of assembly the pins 45,46 are inserted through the slots 61,62 and threadingly engage tapped holes in the spindle 42 of the wing roller 1.

In use, the conveyor 50 is operated in conventional manner with a belt (not shown) passing over the freely rotating rollers 1,59. The angle of inclination of the wing rollers 1 can be quickly and easily altered to change the roughing effect on the belt. To vary the angle of inclination of a wing roller 1 relative to the axis of rotation of the centre roller 59 the wing roller 1 is moved outwardly and upwardly, generally in the direction of arrow A of Fig. 8, so that the adjustment pin 46 is located at an upper end of the slot 61 and the locating pin 45 is disengaged from the recesses 64. By pivoting the wing roller 1 about the adjustment pin 46 the locating pin 45 can be moved along the arcuate slot 62 until it is aligned with the required recess 64. Then by moving the wing roller 1 axially inwardly the locating pin 45 is engaged with the required recess 64. As the locating pin 45 is engaged the adjustment pin 46 slides downwardly in the adjustment slot 61. An alternative position for one of the wing rollers 1 is shown in broken outline in Fig. 8.

It will be appreciated that the roller assembly 51 allows quick and easy adjustment of the inclination of each wing roller 1. Also, should replacement of any of the rollers be necessary this can also be effected quickly. It will be noted that the outer end cover of the wing rollers 1 is closed to prevent ingress of dirt or moisture which could adversely effect the bearings on which the roller is supported.

The invention is not limited to the embodiments hereinbefore described which may be varied in construction and detail.

## Claims

1. A conveyor roller (1) of the type comprising:
a hollow cylindrical roller body (2);
a pair of end covers (3) for the roller body (2);
a support spindle (4) rotatably mounted in bearings (5) inside the end covers (3);
a bearing seal (6) between the spindle (4) and the bearing (5); and
an end cover seal (12, 30, 37) in the opening between the end cover (3) and the spindle (4)
characterised in that
the end cover seal (12, 30, 37) comprises an axial sealing section (15) extending in a direction substantially parallel with the spindle (4) and a radial sealing section (16) extending radially outwardly of the axial sealing section (15); and
the end cover (3) includes a counterbore (10) to receive the radial sealing section (15) of the end cover seal (12, 30, 37).

2. A conveyor roller as claimed in claim 1 wherein the outer face of the end cover seal (12, 30, 37) is flush with the outer face of the end cover (3) adjacent to the end cover seal (12, 30, 37).

3. A conveyor roller as claimed in claim 1 or 2 wherein the radial sealing section (16) of the end cover (3) includes internal fin (17) means extending to engage the counterbore (10), preferably the internal fin means (17) comprises at least two radially spaced-apart fins (17).

4. A conveyor roller as claimed in any preceding claim wherein the back wall of the counterbore (10) is substantially flat.

5. A conveyor roller as claimed in any preceding claim wherein the end cover (3) includes a shoulder (36) adjacent to the counterbore (10) to receive and sealingly retain the end cover seal (30, 37), preferably the end cover seal (30, 37) includes external fin means (38) adjacent to the shoulder.

6. A conveyor roller as claimed in any preceding claim wherein the end cover seal (12, 30, 37) is a static seal (12, 30, 37).

7. A conveyor roller as claimed in any preceding claim wherein the end cover seal (12) is a tight fit on the spindle (4).

8. A conveyor roller as claimed in any preceding claim wherein the axial sealing section (15) of the end cover seal (12, 30, 37) extends towards the bearing seal (6).

9. A conveyor roller as claimed in any preceding claim wherein the end cover seal (12, 30, 37) is of elastomeric material.

10. A conveyor roller as claimed in any preceding claim wherein the end cover (3) is of cast material.

11. A conveyor roller as claimed in any preceding claim wherein the end cover seal (12) extends to the spindle (4).

12. A conveyor roller as claimed in any of claims 1 to 10 wherein the end cover seal (30, 37) extends to a non-rotating section (31) of a contact seal, preferably the contact seal includes a rotating section (32).

13. A conveyor roller as claimed in any preceding claim wherein the bearing seal (6) is mounted in the end cap (3) and at least portion of the bearing seal (6) rotates with the end cap (3).

14. A conveyor roller as claimed in any preceding claim including engagement means (20, 21) for engaging the roller body with each end cover (3), the engagement means comprising a male part (21) on one of the roller body (2) or end cover (3) for engagement in a female slot means (20) on the other of the roller body (2) or end cover (3), preferably the female slot means (20) comprises a slot (20) in each end cover (3) and the male part (21) is formed at the free ends (21) of the roller body (2).

15. A conveyor roller as claimed in any preceding claim wherein the outer surface of the end cover (3) is shaped to induce throw-off of material as the roller is rotating.

16. A conveyor roller as claimed in any preceding claim wherein the roller (2) is a wing roller having an outer blanked end cover and an inner end cover through which the spindle (4) projects, alternatively the roller (2) is a main roller having a spindle (4) projecting at each end of the roller.

17. A conveyor roller assembly including at least one roller as claimed in any preceding claim.

## Patentansprüche

1. Fördererrolle (1) der Art, die folgendes umfaßt:
einen hohlen zylindrischen Rollenkörper (2);
ein Paar Endabdeckungen (3) für den Rollenkörper (2);
eine Tragspindel (4), die drehbar in Lagern (5) innerhalb der Endabdeckungen (3) gelagert ist;
eine Lagerdichtung (6) zwischen der Spindel (4) und dem Lager (5); und
eine Endabdeckungsdichtung (12, 30, 37) in der Öffnung zwischen der Endabdeckung (3) und der Spindel (4), dadurch gekennzeichnet, daß
die Endabdeckungsdichtung (12, 30, 37) einen axialen Dichtungsabschnitt (15), der in einer Richtung im wesentlichen parallel zur Spindel (4) verläuft, und einen radialen Dichtungsabschnitt (16) umfaßt, der radial auswärts von dem axialen Dichtungsabschnitt (15) verläuft; und
die Endabdeckung (3) eine Senkbohrung (10) aufweist, um den radialen Abdichtungsabschnitt (15) der Endabdeckungsdichtung (12, 30, 37) aufzunehmen.

2. Fördererrolle nach Anspruch 1, bei der die Außenfläche der Endabdeckungsdichtung (12, 30, 37) mit der Außenfläche der Endabdeckung (3) neben der Endabdeckungsdichtung (12, 30, 37) bündig ist.

3. Fördererrolle nach Anspruch 1 oder 2, bei der der radiale Dichtungsabschnitt (16) der Endabdeckung (3) Innenrippen (17) aufweist, die so angeordnet sind, daß sie in die Senkbohrung (10) eingreifen, wobei wenigstens zwei radial beabstandete Rippen (17) vorhanden sind.

4. Fördererrolle nach einem der vorherigen Ansprüche, bei der die Rückwand der Senkbohrung (10) im wesentlichen flach ist.

5. Fördererrolle nach einem der vorherigen Ansprüche, bei der die Endabdeckung (3) einen Ansatz (36) neben der Senkbohrung (10) aufweist, um die Endabdeckungsdichtung (30, 37) aufzunehmen und dichtend zu halten, wobei die Endabdeckungsdichtung (30, 37) vorzugsweise Außenrippen (38) neben dem Ansatz aufweist.

6. Fördererrolle nach einem der vorherigen Ansprüche, bei der die Endabdeckungsdichtung (12, 30, 37) eine Dichtung (12, 30, 37) für ortsfeste Teile ist.

7. Fördererrolle nach einem der vorherigen Ansprüche, bei der die Endabdeckungsdichtung (12) fest auf der Spindel (4) sitzt.

8. Fördererrolle nach einem der vorherigen Ansprüche, bei der der axiale Dichtungsabschnitt (15) der Endabdeckungsdichtung (12, 30, 37) in Richtung der Lagerdichtung (6) verläuft.

9. Fördererrolle nach einem der vorherigen Ansprüche, bei der die Endabdeckungsdichtung (12, 30, 37) aus elastomerem Material besteht.

10. Fördererrolle nach einem der vorherigen Ansprüche, bei der die Endabdeckung (3) aus Gußmaterial besteht.

11. Fördererrolle nach einem der vorherigen Ansprüche, bei der die Endabdeckungsdichtung (12) zu der Spindel (4) verläuft.

12. Fördererrolle nach einem der Ansprüche 1 bis 10, bei der die Endabdeckungsdichtung (30, 37) zu einem nichtrotierenden Abschnitt (31) einer Kontaktdichtung verläuft, wobei die Kontaktdichtung vorzugsweise einen rotierenden Abschnitt (32) aufweist.

13. Fördererrolle nach einem der vorherigen Ansprüche, bei der die Lagerdichtung (6) in der Endkappe (3) montiert ist und wenigstens ein Teil der Lagerdichtung (6) mit der Endkappe (3) rotiert.

14. Fördererrolle nach einem der vorherigen Ansprüche, mit Eingriffsmitteln (20, 21), um den Rollenkörper mit jeder Endabdeckung (3) in Eingriff zu bringen, wobei die Eingriffsmittel einen Steckteil (21) an dem Rollenkörper (2) oder der Endabdeckung (3) für den Eingriff in ein Aufnahmeschlitzelement (20) auf dem jeweils anderen Element, Rollenkörper (2) oder Endabdeckung (3), aufweisen, wobei das Aufnahmeschlitzelement (20) vorzugsweise einen Schlitz (20) in jeder Endabdeckung (3) aufweist und das Steckteil (21) an den freien Enden (21) des Rollenkörpers (2) ausgebildet ist.

15. Fördererrolle nach einem der vorherigen Ansprüche, bei der die Außenfläche der Endabdeckung (3) so ausgestaltet ist, daß sie einen Abwurf von Material während der Rotation der Rolle bewirkt.

16. Fördererrolle nach einem der vorherigen Ansprüche, bei der die Rolle (2) eine Flügelrolle mit einer äußeren verschlossenen Endabdeckung und einer inneren Endabdeckung ist, durch die die Spindel (4) vorsteht, wobei die Rolle (2) alternativ eine Hauptrolle ist, die eine Spindel (4) hat, die an jedem Ende der Roller vorsteht.

17. Fördererrollenbaugruppe mit wenigstens einer Rolle nach einem der vorherigen Ansprüche.

## Revendications

1. Un galet (1) pour convoyeur du type comportant :
un corps de galet cylindrique creux (2) ;
une paire de couvercles d'extrémité (3) pour le corps du galet (2) ;
une broche de support (4) monté de façon pivotante dans des paliers (5) à l'intérieur des couvercles d'extrémité (3) ;
un joint de palier (6) entre la broche (4) et le palier (5) ; et
un joint du couvercle d'extrémité (12, 30, 37) dans l'ouverture entre le couvercle d'extrémité (3) et la broche (4) ;
caractérisé en ce que
le joint du couvercle d'extrémité (12, 30, 37) comporte une section d'étanchéité axiale (15) qui s'étend dans une direction essentiellement parallèle à la broche (4) et une section d'étanchéité radiale (16) qui s'étend radialement vers l'extérieur de la section d'étanchéité axiale (15) ; et
le couvercle d'extrémité (3) inclut un chambrage (10) pour recevoir la section d'étanchéité radiale (15) du joint du couvercle d'extrémité (12, 30, 37).

2. Un galet pour convoyeur selon la revendication 1, dans lequel la face extérieure du joint du couvercle d'extrémité (12, 30, 37) affleure avec la face extérieure du couvercle d'extrémité (3) adjacente au joint du couvercle d'extrémité (12, 30, 37).

3. Un galet pour convoyeur selon la revendication 1 ou 2, dans lequel la section d'étanchéité radiale (16) du couvercle d'extrémité (3) inclut un moyen à nervures intérieures (17) qui s'étend pour se mettre en prise avec le chambrage (10) ; de préférence, le moyen à nervures intérieures (17) comporte au moins deux nervures écartées radialement l'une de l'autre (17).

4. Un galet pour convoyeur selon l'une quelconque des revendications précédentes, dans lequel la paroi postérieure du chambrage (10) est essentiellement plate.

5. Un galet pour convoyeur selon l'une quelconque des revendications précédentes, dans lequel le couvercle d'extrémité (3) inclut un épaulement (36) adjacent au chambrage (10) pour recevoir et retenir de manière étanche le joint du couvercle d'extrémité (30, 37) ; de préférence, le joint du couvercle d'extrémité (30, 37) inclut des moyens à nervures extérieures (38) adjacents à l'épaulement.

6. Un galet pour convoyeur selon l'une quelconque des revendications précédentes, dans lequel le joint du couvercle d'extrémité (12, 30, 37) est un joint étanche statique (12, 30, 37).

7. Un galet pour convoyeur selon l'une quelconque des revendications précédentes, dans lequel le joint du couvercle d'extrémité (12) est monté par ajustage serré sur la broche (4).

8. Un galet pour convoyeur selon l'une quelconque des revendications précédentes, dans lequel la section d'étanchéité axiale (15) du joint du couvercle d'extrémité (12, 30, 37) s'étend vers le joint de palier (6).

9. Un galet pour convoyeur selon l'une quelconque des revendications précédentes, dans lequel le joint du couvercle d'extrémité (12, 30, 37) est en une matière élastomère.

10. Un galet pour convoyeur selon l'une quelconque des revendications précédentes, dans lequel le couvercle d'extrémité (3) est en une matière coulée.

11. Un galet pour convoyeur selon l'une quelconque des revendications précédentes, dans lequel le joint du couvercle d'extrémité (12) s'étend jusqu'à la broche (4).

12. Un galet pour convoyeur selon l'une quelconque des revendications 1 à 10, dans lequel le joint du couvercle d'extrémité (30, 37) s'étend jusqu'à une section non tournante (31) d'un joint à contact, le joint à contact incluant de préférence une section tournante (32).

13. Un galet pour convoyeur selon l'une quelconque des revendications précédentes, dans lequel le joint de palier (6) est monté dans le couvercle d'extrémité (3) et une portion au moins du joint de palier (6) tourne avec le couvercle d'extrémité (3).

14. Un galet pour convoyeur selon l'une quelconque des revendications précédentes, qui inclut des moyens de mise en prise (20, 21) pour mettre en prise le corps du galet avec chaque couvercle d'extrémité (3), les moyens de mise en prise se composant d'une partie mâle (21) sur le corps du galet (2) ou sur le couvercle d'extrémité (3) qui se met en prise dans un moyen à encoche femelle (20) sur l'autre ; le corps du galet (2) ou le couvercle d'extrémité (3), le moyen à encoche femelle (20) comportant de préférence une encoche (20) dans chacun des couvercles d'extrémité (3) et la partie mâle (21) étant formée aux extrémités libres (21) du corps du galet (2).

15. Un galet pour convoyeur selon l'une quelconque des revendications précédentes, dans lequel la surface extérieure du couvercle d'extrémité (3) est configurée de manière à produire un rejet de matière pendant que le galet tourne.

16. Un galet pour convoyeur selon l'une quelconque des revendications précédentes, dans lequel le galet (2) est un galet à ailes ayant un couvercle d'extrémité extérieur plein et un couvercle d'extrémité intérieur à travers lequel la broche (4) fait saillie ; en variante, le galet (2) est un galet principal ayant une broche (4) qui fait saillie à chaque extrémité du galet.

17. Un ensemble à galets pour convoyeur qui inclut au moins un galet tel que revendiqué dans l'une quelconque des revendications précédentes.
